# EUROPEAN PATENT APPLICATION

(11) **EP 1 870 276 A1**
(43) Date of publication of application: **26.12.2007**
(21) Application number: 05730667.2
(22) Date of filing: 12.04.2005
(51) Int. Cl.: B60L 9/24

(54) **ELECTRIC VEHICLE CONTROL APPARATUS**

(71) Applicant: MITSUBISHI DENKI KABUSHIKI KAISHA, Chiyoda-ku, Tokyo 100-8310 (JP)
(72) Inventor: HIRAKI, Hidekazu c/o Mitsubishi Denki KK, Tokyo 100-8310 (JP); MATSUMOTO, Takeo c/o Mitsubishi Denki KK, Tokyo 100-8310 (JP); KAKIKAWA, Keiichi c/o Mitsubishi Denki KK, Tokyo 100-8310 (JP)
(74) Representative: Meissner, Bolte & Partner
(86) International application number: PCT/JP2005/007074
(87) International publication number: WO 2006/112002

(57) **Abstract**

In an electric vehicle control apparatus, a converter (3) having a bridge circuit formed by establishing an inverse-parallel connection of rectifying devices (1a to 1d) and self-arc-suppressing devices (2a to 2d) is connected to a secondary winding (5a) of a main transformer (5), and a filter capacitor (8) is connected to an output end of the converter (3). Moreover, an inverter (9) that converts DC power to AC power is connected to both ends of the filter capacitor (8), and charging of the filter capacitor (8) is carried out before the inverter (9) is actuated. In the electric vehicle control apparatus, a charging transformer (12) having an internal impedance that can restrain a rush current flowing at the time of charging the filter capacitor 8 to a predetermined value is connected to a tertiary winding (5c) of the main transformer (5) via switching means (11), and an output voltage of the tertiary winding (5c) stepped up to a predetermined voltage by the charging transformer (12) is rectified by the rectifying devices (1a to 1d), thus charging the filter capacitor (8).

## Description

### Technical Field

This invention relates to an electric vehicle control apparatus.

### Background Art

In a conventional electric vehicle control apparatus, a converter having a bridge circuit formed by providing an inverse-parallel connection of rectifying devices and self-arc-suppressing devices is connected to a secondary winding of a main transformer via a high-voltage contactor, and a filter capacitor is connected to an output end of the converter. Then, an inverter that converts DC power output from the converter to AC power is connected to both ends of the filter capacitor. Moreover, before the inverter is actuated, the high-voltage contactor is turned on while the phase of an AC voltage input to the converter is π/2 to π, and the AC power supplied from the secondary winding is rectified by the rectifying devices, thus charging the filter capacitor (see, for example, Patent Reference 1).

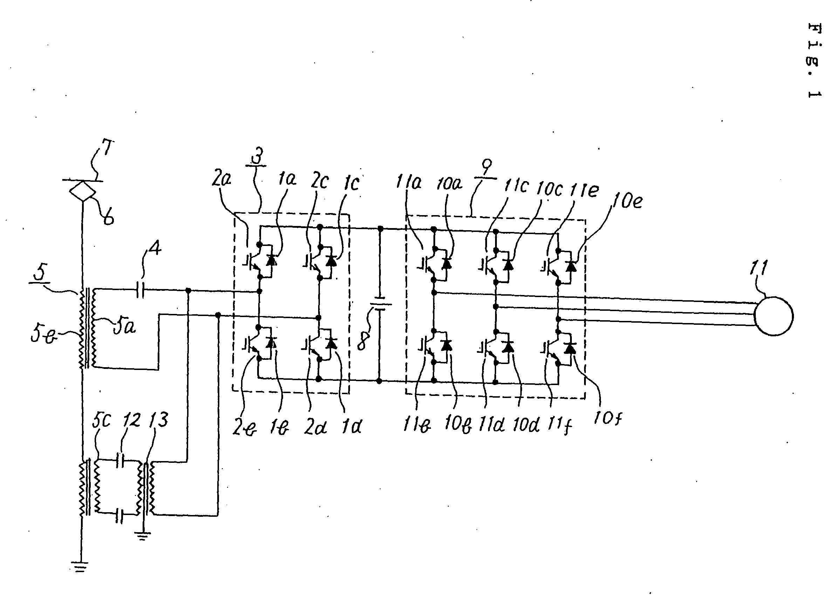

Patent Reference 1: JP-A-11-98610 (Page 3 and Figure 1)

### Disclosure of the Invention

### Problems that the Invention Is to Solve

In the conventional electric vehicle control apparatus, the high-voltage contactor is turned on while the phase of the AC voltage input to the converter is between π/2 to π. However, for example, when the frequency of an AC power source that supplies AC power to the transformer is 50 Hz, since the time during which the phase of the AC voltage is π/2 to π is 5 ms and the operating time of the high-voltage contactor is generally 50 ms to 100 ms, there is a problem that charging control to control charging of the filter capacitor in accordance with the timing of turning on the high-voltage contactor is difficult.

This invention has been made in order to solve the problem as described above and its object is to provide an electric vehicle control apparatus that can easily perform charging control when charging the filter capacitor.

### Means for Solving the Problems

In an electric vehicle control apparatus according to this invention, a converter having a bridge circuit formed by establishing an inverse-parallel connection of rectifying devices and self-arc-suppressing devices is connected to a secondary winding of a main transformer, and a filter capacitor is connected to an output end of the converter. Moreover, an inverter that converts DC power to AC power is connected to both ends of the filter capacitor, and charging of the filter capacitor is carried out before the inverter is actuated.
In the electric vehicle control apparatus, a charging transformer having internal impedance that can restrain a rush current flowing at the time of charging the filter capacitor to a predetermined value is connected to a tertiary winding of the main transformer via switching means, and an output voltage of the tertiary winding stepped up to a predetermined voltage by the charging transformer is rectified by the rectifying devices, thus charging the filter capacitor.

### Advantage of the Invention

According to this invention, stepping-up to a predetermined AC voltage is performed by the charging transformer connected to the tertiary winding of the main transformer via the switching means, and the voltage is rectified by the rectifying devices forming the converter, thus charging the filter capacitor. Therefore, the timing of turning on the switching means can be easily controlled.

### Best Mode for Carrying Out the Invention

### Embodiment 1

Fig. 1 is a structural view of an electric vehicle control apparatus according to Embodiment 1 for embodying this invention. In Fig. 1, an input end of a converter 3 having a bridge circuit formed by establishing an inverse-parallel connection of rectifying devices 1a to 1d, which are fly-wheel diodes, and self-arc-suppressing devices 2a to 2d, is connected to a secondary winding 5a of a main transformer 5 via a high-voltage contactor 4.
A primary winding 5b of the main transformer 5 is connected to an AC power source 7 via a pantograph 6. Then, a filter capacitor 8 is connected to an output end of the converter 3. Moreover, an inverter 9 that converts DC power to AC power is connected to both ends of the filter capacitor 8. The inverter 9 is formed by rectifying devices 10a to 1 0f and self-arc-suppressing devices 11a to 11f and outputs three-phase AC power. A three-phase AC motor 11 that drives an electric vehicle is connected to an output end of the inverter 9.
A primary side of a charging transformer 13 is connected to a tertiary winding 5c of the main transformer 5 via switching means 12 formed by a contactor or semiconductor device. A secondary side of the charging transformer 13 is connected to the input end of the converter 3. Here, an output voltage of the tertiary winding 5c is a low voltage used for illumination, air-conditioning and the like.
Moreover, the charging transformer 13 is set to have an internal impedance that can restrain a rush current flowing at the time of charging the filter capacitor 8 to a predetermined value equal to or lower than the rated current value of the rectifying devices 1a to 1d, and performs stepping-up to a predetermined voltage so that the charging voltage of the filter capacitor 8 becomes a voltage that guarantees the operation of the inverter 9.

In the electric vehicle control apparatus constructed as described above, before the converter 3 and the inverter 9 are actuated, the switching means 12 are turned on and the output voltage of the tertiary winding 5c of the main transformer 5 is stepped up to the predetermined voltage by the charging transformer 13. Then, the output of the tertiary winding 5c, stepped up to the predetermined voltage, is converted to a direct current by the rectifying action of the rectifying devices 1a to 1d of the converter 3, thus charging the filter capacitor 8. As the filter capacitor 8 is charged, the switching means 12 are opened to turn on the high-voltage contactor 4. Thus, the operation of the converter 3 and the inverter 9 is started and the driving of the three-phase AC motor 11 is started.
As described above, the output voltage of the tertiary winding 5c, stepped up to the predetermined voltage by the charging transformer 13 having an internal impedance that can restrain the rush current flowing at the time of charging the filter capacitor 8 to the predetermined value, is rectified by the rectifying devices 1a to 1d forming the converter 3, and the filter capacitor 8 is charged. Thus, charging control can be easily performed.

### Brief Description of the Drawings

Fig. 1 is a structural view of an electric vehicle control apparatus according to Embodiment 1 for embodying this invention.

### Description of Reference Numerals and Signs

- 1a to 1d: rectifying device
- 3: converter
- 5: main transformer
- 5a: secondary winding
- 5c: tertiary winding
- 8: filter capacitor
- 9: inverter
- 12: switching means
- 13: charging transformer.

## Claims

1. An electric vehicle control apparatus in which a converter having a bridge circuit formed by establishing an inverse-parallel connection of rectifying devices and self-arc-suppressing devices is connected to a secondary winding of a main transformer, a filter capacitor is connected to an output end of the converter, then an inverter that converts DC power to AC power is connected to both ends of the filter capacitor, and charging of the filter capacitor is carried out before the inverter is actuated,
wherein the electric vehicle control apparatus is **characterized in that** a charging transformer having an internal impedance that can restrain a rush current flowing at the time of charging the filter capacitor to a predetermined value is connected to a tertiary winding of the main transformer via switching means, and **in that** an output voltage of the tertiary winding stepped up to a predetermined voltage by the charging transformer is rectified by the rectifying devices, thus charging the filter capacitor.
